(19) Europäisches Patentamt
European Patent Office
Office européen des brevets

(11) **EP 1 372 956 B1**

(12) **EUROPÄISCHE PATENTSCHRIFT**

(45) Veröffentlichungstag und Bekanntmachung des Hinweises auf die Patenterteilung:
**23.04.2008 Patentblatt 2008/17**

(21) Anmeldenummer: **02716825.1**

(22) Anmeldetag: **06.03.2002**

(51) Int Cl.:
***B32B 27/10*** *(2006.01)*

(86) Internationale Anmeldenummer:
**PCT/EP2002/002439**

(87) Internationale Veröffentlichungsnummer:
**WO 2002/070251 (12.09.2002 Gazette 2002/37)**

(54) **VERWENDUNG VON IONOMEREN ZUR ABDICHTUNG VON DÄMMSTOFFEN**

USE OF IONOMERS FOR SEALING INSULATING MATERIALS

UTILISATION D'IONOMERES DESTINES A L'ETANCHEITE DE MATIERIAUX ISOLANTS

(84) Benannte Vertragsstaaten:
**AT BE CH CY DE DK ES FI FR GB GR IE IT LI LU MC NL PT SE TR**
Benannte Erstreckungsstaaten:
**LT LV RO SI**

(30) Priorität: **08.03.2001 DE 10111319**
**26.07.2001 DE 10136089**

(43) Veröffentlichungstag der Anmeldung:
**02.01.2004 Patentblatt 2004/01**

(73) Patentinhaber: **Biologische Insel Lothar Moll GmbH & Co. KG**
**68723 Schwetzingen (DE)**

(72) Erfinder: **MOLL, Lothar**
**68723 Schwetzingen (DE)**

(74) Vertreter: **Thews, Karl et al**
**Sartorius, Thews & Thews**
**Patentanwälte**
**Augustaanlage 32 (Augusta Carree)**
**68165 Mannheim (DE)**

(56) Entgegenhaltungen:
**US-A- 3 651 183      US-A- 4 645 710**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft die Verwendung von Ionomeren zur Abdichtung von Dämmstoffen. Speziell betrifft sie die Verwendung von Schichtstoffen für den genannten Zweck, die mindestens eine Schicht der Ionomere enthalten, sowie derartige Schichtstoffe selbst. Insbesondere erstreckt sich die Erfindung auf flächenförmige Tränkwerkstoffe, welche die Ionomere als Tränkharz enthalten.

Die Verwendung von Dämmstoffen wie beispielsweise Schaumkunststoffen und Glaswolle zur weitgehenden thermischen Isolierung von Gebäuden ist in zahlreichen Ausgestaltungen allgemein bekannt. In einer der häufigsten Ausführungsformen befestigt man etwa 4 bis 40 cm starke Platten des Dämmstoffs in oder auf Wandkonstruktionen oder unter dem Dach zwischen, unter oder auf den Dachsparren.

Die Dämmstoffe entfalten ihre volle Wirkung allerdings nur dann, wenn der Luftaustausch durch sie hindurch unterbunden wird, denn andernfalls würden mit der nach außen diffundierenden Luft des beheizten Innenraums erhebliche Wärmemengen verloren gehen. Umgekehrt verhielte es sich im Sommer, wenn die warme Luft nach innen dringt und das Gebäude unerwünschterweise aufheizt und damit den Energiebedarf einer eventuell vorhandenen Klimaanlage nicht unbeträchtlich erhöhen würde.

Es hatte daher zunächst nahegelegen, die Wärmedämmstoffe mittels eines luftundurchlässigen Materials, z. B. einer starken Polyethylen- oder PVC-Folie abzudichten, aber dies hat sich nicht bewährt, weil sich Schadstellen wie Risse oder Löcher praktisch nicht vermeiden lassen und die Luft somit dennoch in den Dämmstoff gelangt. Kühlt sie sich dann ab, kondensiert die mit ihr eingeschleppte Feuchtigkeit aus, so dass es im Laufe der Zeit zu erheblichen Wasseransammlungen kommen kann, die durch Trocknung praktisch nicht mehr beseitigt werden können. Das Wasser bewirkt indes nicht nur korrosive Schäden, sondern vermindert auch den Effekt der thermischen Isolierung.

Wie ebenfalls allgemein bekannt ist, gibt man daher solchen Abdichtungsmaterialien den Vorzug, welche der Diffusion der Luft und des in ihr enthaltenen Wasserdampfes zwar entgegenwirken, sie aber nicht gänzlich unterbinden, so dass eine Rückdiffusion des Wasserdampfes, also die Trocknung des Dämmstoffs, ermöglicht wird.

Solche Materialien, die als Dampfbremsen bezeichnet werden und die man üblicherweise in Form von Folien oder Schichtstoffen verwendet, sind Polymere wie Polyethylen, Polyamide, Ethylen-Acrylsäure-Copolymerisate und Polyester in dünner Schicht. Näheres hierzu ist z. B. den Patentveröffentlichungen DE-A 195 14 420 und 199 02 102 zu entnehmen.

Die Dampfbremsen aus diesen Materialien bieten als Folie oder als geeigneter Schichtstoff meist den Vorteil, dass ihr Widerstand gegen die Diffusion des Wasserdampfs von der relativen Luftfeuchtigkeit abhängig ist. Bei geringer relativer Luftfeuchtigkeit ist dieser Widerstand höher als bei hoher relativer Luftfeuchtigkeit. Dies hat zur Folge, dass die Austrocknung des nassen Dämmstoffs in der meist feuchten sommerlichen Luft erleichtert wird. So beträgt der Wasserdampf-Diffusionswiderstandswert ($s_d$-Wert) im Fall einer 60 $\mu$m starken Polyamid-6-Folie nach DIN 52615 bei 30 % relativer Luftfeuchtigkeit etwa 4,5 m und bei 80 % nur etwa 0,5 m.

Der $s_d$-Wert entspricht der Dicke einer ruhenden Luftschicht, deren Diffusionswiderstand so groß ist wie derjenige der Probe, in diesem Beispiel also der dünnen Polyamid-6-Folie. Er wird nach DIN 52615 üblicherweise im dry-cup-Verfahren (Trockenbereichsverfahren) zwischen den beiden Luftfeuchtigkeiten 0% und 50%, im Mittel 25%, und im wet-cup-Verfahren (Feuchtbereichsverfahren) zwischen den beiden Luftfeuchtigkeiten 50% und 95%, im Mittel 72,5%, durchgeführt.

An das Material für die Dampfbremsen werden aber nicht nur die geschilderten Anforderungen an die Diffusionseigenschaften gestellt, sondern auch eine Reihe von sonstigen Bedingungen. So soll es thermisch, chemisch und mechanisch stabil und leicht zu verarbeiten sein. Außerdem soll das Material physiologisch unbedenklich sein, es soll sich nicht oder nur wenig elektrostatisch aufladen und im übrigen mit anderen Materialien, vor allem denjenigen der Schichtstoffe, verträglich sein, damit es nicht zur Dekomposition der Schichtstoffe kommt. Es soll ökologisch verträglich sein und auch im Brandfall keine hochtoxischen Gase entwickeln, wie sie beispielsweise durch Halogenverbindungen aus Flammschutzmitteln in Form von Dioxinen und Furanen oder durch Polyamid in Form von Ammoniak und Polyethan Blausäure entstehen können. Nicht zuletzt soll es auch den Erfordernissen der Wirtschaftlichkeit genügen.

Dieser Aufgabe entsprechend wurde gefunden, dass sich Ionomere hervorragend zur Abdichtung von Dämmstoffen verwenden lassen, und außerdem wurden neue Schichtstoffe gefunden, welche dieses Material in mindestens einer Schicht als wesentliche Komponente enthalten. Ferner wurden besonders zweckmäßige Ausgestaltungen der Erfindung gefunden, wie sie im Folgenden beschrieben sind.

Ionomere sind definitionsgemäß (s. z. B. Römpps Chemielexikon, Georg Thieme Verlag, 9. Auflage, 1990) statistische thermoplastische Copolymere aus

a) einem Monoolefin,
b) einer monoolefinisch ungesättigten Säure,
c) gewünschtenfalls weiteren Comonomeren zur Modifizierung der chemischen und physikalischen Eigenschaften dieser Copolymerisate, wobei

d) die sauren Gruppen dieser Copolymerisate gänzlich oder zum Teil mit anorganischen Kationen neutralisiert sind.

Zahlreiche dieser Ionomere sowie die Verfahren zu ihrer Herstellung sind aus der Fachliteratur bekannt, und eine Reihe von ihnen ist unter der Bezeichnung Surlyn® der Firma DuPont mit der Empfehlung für Verpackungs- und Beschichtungszwecke im Handel erhältlich. Näheres ist beispielsweise der US-A 3 264 272 sowie den Firmenprospekten Surlyn® vom Januar 2001 zu entnehmen.

Ferner sind Ionomere in anderen Anwendungsformen aus der US-A-3 651 183, Hosoda et al, und US-A-4 645 710, Baitinger et al, bekannt.

In der Entgegenhaltung D1 (US-A-3 651 183) ist ein spezielles Verfahren zur Herstellung von Schaumkunststoffen auf Basis verschäumbarer Polyolefine, also zur Herstellung von Dämmstoffen beschrieben. Nach Beispiel 18 enthält die verschäumbare Masse und damit auch der fertige Schaumkunststoff neben einem überwiegenden Anteil an Polyethylen auch ein Ionomer. Allgemein werden für die erhältlichen Schaumkunststoffe (Dämmstoffe) vorteilhafte Eigenschaften wie geringe Wasserabsorption und Feuchtedurchlässigkeit sowie hohe Hitzeisolation beschrieben.

Die Lehre von D2 (US-A-4 645 710) erstreckt sich auf Laminatkörper aus verschäumten Polyurethan- oder Isocyanuratharzen als Kernschicht ("core") und mindestens einer luftdichten Deckschicht ("facer", "serving as gas barriers") aus Aluminium. Diese Laminate sind ihrer Funktion nach Dämmstoffe mit integrierter Dampfsperre. Zur Verbesserung der Haftung zwischen Schaumstoff und Deckschicht und damit zur Verbesserung der mechanischen Eigenschaften der Laminatkörper wird die Mitverwendung diverser Haftvermittler ("adhesives") vorgeschlagen, welche chemische Verbindungen mit dem Schaumstoff eingehen können, wobei nach Beispiel 4 ein Ionomer (Surlyn®) zu diesem Zweck dient. Das Ionomer wird als Kleber eingesetzt.

Gegenstand des vorliegenden Anmeldung ist eine Verwendung von Ionomeren als in Dampfbremsen für die Gebäude wirksames dampfbremsendes Material mit einem Widerstand gegen die Diffüsion von Wasserdampf der von der relativen Luftfeuchtigkeit abhängig ist zur Abdichtung von Dämmstoffen, wobei das Ionomer aus 50 bis 99 mol-% Ethylen und 1 bis 50 mol-% Methacrylsäure gebildet ist und die sauren Gruppen dieser Copolymerisate zu 0,5 bis 100 % mit Lithium-, Natrium-, Magnesium-, Kalium- und/oder Zinkkationen <u>oder mit dem Kation des Erdalkalimetalls Calcium</u> neutralisiert sind und

a) das Material in Form einer Folie aus Ionomeren oder

b) die Dampfbremse in Form eines flächenförmigen Tränkwerkstoffes aus einem Vlies oder Gewebe als Gerüststoff und einem Ionomer als Tränkharz oder

c) die Dampfbremse in Form eines selbsttragenden Schichtstoffes, in dem eine der Schichten eine Ionomerfolie mit einer Stärke zwischen 5 und 100 $\mu$m ist, gebildet ist.

Comonomer (a) ist daher Ethylen in einem Anteil im Ionomer in der Regel von 50 bis 99, vorzugsweise 80 bis 90 mol-%.

Comonomer (b) ist Methacrylsäure in Anteilen von 1 bis 50, vorzugsweise 10 bis 20 mol-%.

Als weitere Comonomere (c) kommen monoolefinisch ungesättigte Verbindungen wie Acrylsäure- und Methacrylsäure $C_1$-$C_4$-Alkylester sowie des weiteren Styrol, Vinylacetat, Vinylpropionat, Acrylamid, Methacrylamid, Acrylnitril und Methacrylnitril in Anteilen bis zu 10 mol-% in Betracht. Auch geringe Mengen bifunktioneller Monomere wie Butadien können für die mechanischen und chemischen Eigenschaften der Folien von Vorteil sein, sofern das Material thermoplastisch bleibt.

Anorganische Kationen (d) sind die Alkalimetalle Lithium, Natrium und Kalium sowie die Erdalkalimetalle wie Calcium und Magnesium. Auch Zinkkationen sind geeignet. Der Neutralisationsgrad der sauren Gruppen liegt in der Regel bei 0,5 bis 100%, vorzugsweise 10 bis 70%. Dies entspricht einem Metallgehalt des Ionomers im Bereich von etwa 0,1 bis 10, vorzugsweise 1 bis 5 Gew.-%.

Für die Zwecke der vorliegenden Erfindung empfehlen sich besonders Ionomere aus

$a_1$) 50 bis 99 mol-% Ethylen und
$b_1$) 1 bis 50 mol-% Methacrylsäure, wobei
$d_1$) die sauren Gruppen dieser Copolymerisate zu 0,5 bis 100 %, vorzugsweise zu 10 bis 70 % mit Lithium-, Natrium-, Magnesium-, Kalium- und/oder Zinkkationen neutralisiert sind.

Diese Ionomere haben hervorragende anwendungs- und verarbeitungstechnische Eigenschaften und werden darüber hinaus, wie erfindungsgemäß festgestellt wurde, den Anforderungen an ein wirkungsvolles Dampfbremsenmaterial gerecht. Dies gilt besonders für die Surlyn-Typen mit Natrium als Kationen wie Typ 1605 sowie für die Typen der 8000er-Reihe, z. B. 8120, 8140 und 8220. Folien aus diesen Materialien bezogen auf eine Stärke von 15 $\mu$m weisen

bei 25 % relativer Luftfeuchtigkeit einen bevorzugten $s_d$-Wert zwischen 3 und 10 m und bei 72,5% relativer Luftfeuchtigkeit einen $s_d$-Wert zwischen 0,5 und 4 m auf, wobei die für das Diffusionsverhalten charakteristischen Differenzen $\Delta s_d$ 25/72,5 im Bereich von 2 bis 8 m liegen.

Allgemein nimmt der $\Delta s_d$ 25/72,5-Wert mit zunehmender Polarität des Materials zu. Besonders hohe Differenzwerte haben daher Ionomere mit Kalium als Komponente (d), so dass erfindungsgemäße Abdichtungen aus diesem Material auch extremen Ansprüchen genügen, etwa im Fall von Gebäuden im Gebirgsklima mit seinen oft krassen Temperaturunterschieden und im tropischen und subtropischen Klima sowie in Flachdach- und Grasdachkonstruktionen.

Für die Leistungsfähigkeit einer feuchtvariablen Dampfbremse ist aber nicht nur der $\Delta s_d$-Wert ein wichtiges Kriterium, sondern auch das Verhältnis f des höheren Widerstandswertes $s_{dh}$ zum niedrigeren Widerstandswert $s_{dn}$. Zu berücksichtigen ist nämlich nicht nur die Feuchtigkeitsvariabilität der Dampfbremse an sich, sondern auch deren Leistung, d. h. die Diffusion der Dampfmenge m pro Zeiteinheit. Für das Verhältnis der diffundierenden Dampfmengen $m_h$ und $m_n$ bei hohem bzw. niedrigem Diffusionswiderstand $s_{dh}$ und $s_{dn}$ gilt die indirekt proportionale Beziehung

$$f \;=\; s_{dh} \,/\, s_{dn} \;=\; {}^{m/n} \big/ {}_{m/h}$$

welche besagt, dass die pro Zeiteinheit passierende Dampfmenge umso kleiner ist, je größer der Diffusionswiderstand ist, und umgekehrt.

Im Hinblick auf die Leistung sollte der $s_{dn}$ bei 25% relativer Luftfeuchtigkeit im Bereich von 1 bis 20 m, vorzugsweise 1 bis 4 m und $s_{dn}$ im Bereich von 0,02 bis 4, vorzugsweise 0,02 bis 2 m liegen, sich wegen der Feuchtevariabilität aber trotzdem durch einen Faktor f, der vorzugsweise > 2, besonders > 5 ist, deutlich unterscheiden.

Diese Anforderung wird insbesondere von den Kalium-Ionomeren erfüllt.

Dampfbremsen mit derartigen Charakteristika fungieren nicht nur feuchtvariabel, sondern sorgen darüber hinaus auch für schnellere Trocknungsvorgänge.

So wird erreicht, dass im winterlichen Klima, wenn die erfindungsgemäße Dampfbremse beispielsweise im Bereich von 25% bis 50% relativer Luftfeuchtigkeit liegt, nur ein Feuchtigkeitsstrom von ca. 1 - 10 g/m$^2$ 24h in die Dämmerung eindringt, wogegen im sommerlichen Klima, wenn die erfindungsgemäße Dampfbremse beispielsweise im Bereich von 60% bis zu 100% relativer Luftfeuchtigkeit liegt, bis über 300 g/m$^2$ 24h Feuchtigkeit aus der Konstruktion austrocknen kann.

Dampfbremsen mit den beschriebenen Eigenschaften und mit einem niedrigen Diffusionswiderstand, beispielsweise von 1,2 - 2,5 m bei 25% rel. Umgebungsluftfeuchtigkeit eignen sich besonders vorteilhaft für Dachkonstruktionen, Dampfbremsen mit höherem Diffusionswiderstand eignen sich besonders vorteilhaft für Wandkonstruktionen.

Selbstverständlich eignen sich auch Mischungen verschiedener Ionomere, besonders von Kalium-Ionomeren mit Natrium-Ionomeren, wobei der Anteil der Kalium-Ionomere vorzugsweise 5 bis 95, besonders 50 bis 80 Gew.% beträgt. Die letztgenannten Mischungen weisen nicht nur hervorragende Dampfbremseigenschaften auf, sondern sie lassen sich auch besonders gut zu Schichtstoffen und Tränkwerkstoffen verarbeiten.

Wie oben dargelegt, können die chemischen und physikalischen Eigenschaften der erfindungsgemäß zu verwendenden Ionomere mit Hilfe von Comonomeren (c) in an sich bekannter Weise an spezielle Anforderungen angepasst werden, z. B. im Hinblick auf die Kompatibilität mit den Gerüst- und Trägermaterialien, auf die Einstellung bestimmter $s_d$-Werte oder auch im Hinblick auf die Biegsamkeit, Steifigkeit oder Reißfestigkeit.

Derartige spezielle anwendungstechnische Eigenschaften lassen sich aber nicht nur durch Abmischungen der Ionomere untereinander erzielen, sondern natürlich auch durch Abmischungen der Ionomere mit anderen Polymeren, z. B. Polyamiden, Polyestern, Polyurethanen und Polyolefinen. Sehr gut geeignet erweisen sich vor allem Mischungen mit Copolymeren aus Ethylen und Vinylacetat sowie mit Copolymeren aus Ethylen und Butylacrylat oder Ethylen und Acrylsäure oder Ethylen und Metacrylsäure oder Ethylenacrylsäure-Copolymer oder Ethylen und Methylacrylat jeweils mit Natrium- und besonders mit Kalium-Ionomeren. In den Polymermischungen beträgt der Anteil der Ionomere vorzugsweise 30 bis 95, besonders 50 bis 80 Gew.%.

Als Ionomere gelten im vorliegenden Fall also auch deren Mischungen untereinander als auch mit Thermoplasten, selbstverständlich auch Mischungen, die mehr als ein Ionomer und mehr als eines der anderen Polymere enthalten.

Die erfindungsgemäß zu verwendenden Ionomere können in Form wässriger Dispersionen oder von Schmelzen auf die Wärmedämmstoffe aufgebracht werden, z. B. durch mehrmaliges Streichen oder Spritzen, bis die so entstehenden Schichten die hinreichende Stärke von 5 bis 100, vorzugsweise 10 bis 30 $\mu$m haben. Von dieser Methode wird man aber nur Gebrauch machen, wenn die Oberfläche des Dämmstoff-Bauteils stark gekrümmt oder uneben ist und das Verlegen von Folien schwierig oder aus optischen Gründen, z. B. in Innenräumen, nicht erwünscht ist.

Im Fall von planen oder zylindrischen Oberflächen kann man Ionomerfolien verwenden, die in der Regel mittels eines Haftklebers auf dem Dämmstoff befestigt werden müssen, da die sehr dünnen Folien - sie haben in der Regel eine Stärke von 5 bis 100, vorzugsweise 10 bis 30 $\mu$m - für sich allein für eine freie Bespannung meistens nicht genügend

EP 1 372 956 B1

reißfest sind.

Im Normalfall verwendet man die Ionomere daher in Form von selbsttragenden Schichtstoffen, in denen eine der Schichten eine Ionomerfolie oder -schicht der angegebenen Stärke ist. Um diese für den erfindungsgemäßen Zweck wichtigste Schicht vor Beschädigungen zu schützen, wie sie bei der Herstellung und Verlegung kaum gänzlich vermeidbar sind, schließt man sie zweckmäßigerweise zwischen den anderen Schichten des Schichtstoffes ein.

Diese anderen Schichten, die sich hauptsächlich aus mechanischen Gründen und damit auch wegen der besseren Handhabung empfehlen, können prinzipiell aus jedem Material bestehen, welches in Schichtform keine höheren $s_d$-Werte hat als die Ionomerschicht.

Solche Schichten sind in erster Linie Gerüstschichten wie Vliese, Gewebe oder Gitter aus inerten Stoffen wie Polyethylen, Polypropylen, Polyester, Glasfasern oder Viskose. Auch perforierte Folien aus Polyethylen, Polypropylen und Polyester kommen in Betracht. Eine hohe Formstabilität in Längs- und Querrichtung des Schichtstoffes erreicht man mit Schichten aus Papier.

Es ist ferner möglich, diese Schichtstoffe mit Hilfsstoffen zu versehen, z. B. mit Flammschutzmitteln, mit denen man beispielsweise die Papierbahnen imprägniert.

Sieht man von den erfindungsgemäßen Ionomerschichten ab, sind derartige Schichtstoffe sowie deren Herstellung, z. B. durch Verklebung oder nach Beschichtungs- oder Extrusionsverfahren, in zahlreichen Ausführungsformen allgemein bekannt, so dass sich weitere Angaben hierzu erübrigen, zumal die Ionomere keine besonderen Verarbeitungsprobleme aufwerfen.

Gut bewährt haben sich beispielsweise Schichtstoffe folgenden Aufbaus, jeweils in der Reihenfolge obere Schicht, mittlere Schicht(en), untere Schicht:

1) Papier, 80 - 120 $\mu$m
Ionomer, 10 - 20 $\mu$m
Papier, 80 - 120 $\mu$m

2) Polyethylenspinnvlies, 20 - 60 $\mu$m
Ionomer, 10 - 20 $\mu$m
Polyethylenspinnvlies, 20 - 60 $\mu$m

3) Viscosevlies, 20 - 60 $\mu$m
Ionomer, 10 - 20 $\mu$m
Viscosevlies 20 - 60 $\mu$m

4) Polyesterspinnvlies, 20 - 60 $\mu$m
Ionomer, 10 - 20 $\mu$m
Polyesterspinnvlies 20 - 60 $\mu$m

5) Die vorgenannten Schichtstoffe (1) - (4), die zur Erhöhung der Festigkeit ein Vlies oder Gewebe aus Polyester, Glasfasern oder Polyethylen als weitere Mittelschicht enthalten.

Für den erfindungsgemäßen Zweck sind auch flächenförmige Tränkwerkstoffe hervorragend geeignet, in denen ein Vlies oder ein Gewebe die Gerüstschicht bildet und in denen die Gerüstschicht mit dem Ionomer als Tränkharz imprägniert ist. Als Gerüstmaterial kommen Polyethylenspinnvliese, Polyamidspinnvliese und cellulosehaltige Materialien wie vor allem saugfähiges Papier in Betracht. Diese Tränkwerkstoffe haben nicht nur die guten Eigenschaften der entsprechenden Schichtstoffe, sondern sind auch in besonders wirtschaftlicher Weise herstellbar. Hierzu braucht man einfach nur das Vlies oder Gewebe mit einer Schmelze des Ionomers zu imprägnieren und das Ionomer danach durch Abkühlung erstarren zu lassen.

Wie herkömmliche Schichtstoffe zur Abdichtung der Wärmedämmstoffplatten, die sich auch zur akustischen Dämmung eignen, werden die erfindungsgemäßen Schichtstoffe bzw. Tränkwerkstoffe in Bahnenrollen bereitgestellt. Dämmstoffwände beklebt man mit den Bahnen, und Platten, die horizontal oder schräg unter dem Dach angebracht sind, können freitragend mit einigen Zwischenbefestigungen mit dem Schichtstoff bzw. Tränkwerkstoff unterspannt werden, wobei ein Luftspalt zwischen Dämmstoff und Dampfbremse die Wirkung normalerweise nicht beeinträchtigt, vorausgesetzt, sie ist nach den Seiten hin abgedichtet. Eine beidseitige Abdichtung des Dämmstoffes ist möglich, in der Regel aber nicht erforderlich.

**Beispiele**

An einigen Ethylen/Methacrylsäure-Ionomeren vom Surlyn-Typ der Firma DuPont gemäß Informationsmaterial

5

vom Januar 2001 wurden die $s_d$-Werte von Probefolien nach der DIN-Vorschrift 52615 im dry cup und im wet cup bezogen auf 15 $\mu$m Stärke orientierend ermittelt. Die Ionomere enthielten als Kationen Natrium- bzw. Kalium-Kationen. Der Metallionen-Gehalt wurde nach DIN 38406-E14 ermittelt.

Die Ergebnisse sind der folgenden Tabelle zu entnehmen:

| Ionomer | $s_d$-Wert [m] bei rel. Luftfeuchtigkeit von | | $\Delta$sd 25/72,5 (m) | f[3] |
|---|---|---|---|---|
| | dry cup 25 % | wet cup 72,5 % | | |
| Surlyn® 8150[1] Na-Typ, 2,2 Gew.-%Na | 5, 5 | 1,4 | 4, 1 | 3, 9 |
| Surlyn®8220[1] Na-Typ 1,9 Gew.-%Na | 5,0 | 1,5 | 3,5 | 3,6 |
| Surlyn®89945[1] Na-Typ 1,8 Gew.-%Na | 7,5 | 3,1 | 4,4 | 2,4 |
| Himilan®MK154[2] K-Typ 4,2 Gew.-% K | 1,4 | 0,09 | 1,3 | 16 |
| [1] Ionomer der Firma DuPont [2] Ionomer der Firma DuPont Mitsui Petrochemicals [3] f = $s_{d25}$ / $s_{d72,5}$ | | | | |

Diese Werte lassen unmittelbar auf die hervorragende Eignung der Ionomere als Material für Dampfbremsen schließen.

**Patentansprüche**

1. Verwendung von Ionomeren als in Dampfbremsen für die Gebäude wirksames dampfbremsendes Material mit einem Widerstand gegen die Diffusion von Wasserdampf, der von der relativen Luftfeuchtigkeit abhängig ist, zur Abdichtung von Dämmstoffen, wobei das Ionomer aus 50 bis 99 mol-% Ethylen und 1 bis 50 mol-% Methacrylsäure gebildet ist und die sauren Gruppen dieser Copolymerisate zu 0,5 bis 100 % mit Lithium-, Natrium-, Magnesium-, Kallum- und/oder Zinkkationen oder mit dem Kation des Erdalkalimetalls Calcium neutralisiert sind und

   a) das Material in Form einer Folie aus Ionomeren oder
   b) die Dampfbremse in Form eines flächenförmigen Tränkwerkstoffes aus einem Vlies oder Gewebe als Gerüststoff und einem Ionomer als Tränkharz oder
   c) die Dampfbremse in Form eines selbsttragenden Schichtstoffes, in dem eine der Schichten eine Ionomerfolie mit einer Stärke zwischen 5 und 100 $\mu$m ist, gebildet ist.

2. Verwendung nach Anspruch 1, wobei das Ionomer in Schichtform folgenden nach DIN 52615 bestimmte Wasserdampf-Diffusionswiderstände ($s_d$-Werte) aufweiset:

   - bei 25 % relativer Luftfeuchtigkeit
   einen sd-Wert von 1 bis 20 m oder
   von 4 bis 20 m oder 1 bis 4 m und
   - bei 72,5 % relativer Luftfeuchtigkeit
   einen sd-Wert von 0,02 bis 4 m,

   wobei sich beide sd-Werte bei 25 % relativer Luftfeuchtigkeit und bei 72,5 % relativer Luftfeuchtigkeit um einen Faktor f größer 2, besonders größer 5 unterscheiden.

3.  Verwendung von Ionomeren nach einem der vorstehenden Ansprüche für Schichtstoffe, in denen die Mittelschicht aus dem Ionomer besteht, eine der äußeren Schichten tragende Funktion und die andere eine die Mittelschicht schützende oder ebenfalls tragende Funktion hat.

4.  Verwendung nach Anspruch 3 für einen Schichtstoff, bei dem beide äußeren Schichten aus Papier, Polyethylenspinnvlies, Polypropylenspinnvlies, Polyesterspinnvlies oder Viscosevlies bestehen.

5.  Verwendung nach Anspruch 3 oder 4 mit einem Schichtstoff mit einer zusätzlichen Mittelschicht aus einem Vlies, Gewebe oder Gitter aus Polyester, Glasfasern, Polyethylen oder Polypropylen.

6.  Verwendung der Ionomere nach den Ansprüchen 1 bis 5 in Form eines Tränkwerkstoffes aus einem Gerüststoff und dem Ionomer, wobei der Gerüststoff ein Vlies oder Gewebe aus Polyethylenspinnfasem, Polypropylenspinnfasern, Polyesterspinnfasern, Cellulosefasern, Polyamid oder Papier ist.

7.  Verwendung der Ionomere für einen flächenförmigen Tränkwerkstoff nach Anspruch 1, in denen die Menge der Ionomere 2 bis 100 g/m$^2$ beträgt.

8.  Verwendung der Ionomere nach Anspruch 1, **dadurch gekennzeichnet, dass** sie als Abmischungen mit Polyamiden, Polyestern, Polyurethanen, Polyolefinen, Copolymeren aus Ethylen und Vinylacetat, Copolymeren aus Ethylen und Butylacrylat, Copolymeren aus Ethylen und Acrylsäure, Copolymeren aus Ethylen und Metacrylsäure, Ethylenacrylsäure-Copolymer und/oder Copolymeren aus Ethylen und Methylacrylat jeweils mit Natrium- und/oder mit Kalium-Ionomeren gebildet sind, wobei der Anteil der Ionomere vorzugsweise 30 Gew.% bis 95 Gew.%, insbesondere 50 Gew.% bis 80 Gew.% beträgt.

9.  Verwendung von Tränkwerkstoffen und Schichtstoffen nach Anspruch 1 zum Bekleben oder Unterspannen von Dämmstoffwänden.

## Claims

1.  Use of ionomers as vapour-sealing material in vapour barriers effective for buildings, with resistance to diffusion of water vapour dependent on relative humidity, for sealing insulating materials, whereby the ionomer is formed from 50 to 99 mol-% ethylene and 1 to 50 mol-% methacrylic acid and the acid groups of this copolymerisate are neutralised to 0.5 to 100 % with lithium, sodium, magnesium, potassium and/or zinc cations or with the cation of the earth alkali metal calcium and

    a) the material is formed in the form of a film of ionomers or
    b) the vapour barrier in the form of a flat impregnated material comprising a fleece or woven fabric as scaffold and an ionomer as impregnating resin or
    c) the vapour barrier in the form of a self-supporting layer material, in which one of the layers is an ionomer film with a thickness between 5 and 100 $\mu$m.

2.  Use as claimed in Claim 1, whereby the ionomer in layer form has the following water vapour diffusion resistances ($s_d$-values) determined according to DIN 52615:

    - at 25 % relative humidity
    a sd-value of 1 to 20 m or
    of 4 to 20 m or 1 to 4 m and
    - at 72.5 % relative humidity
    a sd-value of 0.02 to 4 m,

    whereby both sd-values are distinguished at 25 % relative humidity and at 72.5 % relative humidity by a factor f greater than 2, particularly greater than 5.

3.  Use of ionomers as claimed in any one of the preceding claims for layer materials, in which the middle layer comprises the ionomer, one of the outer layers has a support function and the other has a function protecting or also supporting the middle layer.

4. Use as claimed in Claim 3 for a layer material, in which both outer layers comprise paper, polyethylene spunbonded fabric, polypropylene spunbonded fabric, polyester spunbonded fabric or viscose fleece.

5. Use as claimed in Claim 3 or 4 with a layer material with an additional middle layer comprising a fleece, woven fabric or lattice work of polyester, glass fibres, polyethylene or polypropylene.

6. Use of the ionomers as claimed in Claims 1 to 5 in the form of a impregnated material comprising a scaffold and the ionomer, whereby the scaffold is a fleece or woven fabric of polyethylene spinning fibres, polypropylene spinning fibres, polyester spinning fibres, cellulose fibres, polyamide or paper.

7. Use of the ionomers for a flat impregnated material as claimed in Claim 1, in which the quantity of ionomers is 2 to 100 g/m$^2$.

8. Use of the ionomers as claimed in Claim 1, **characterised in that** they are formed as mixtures with polyamides, polyesters, polyurethanes, polyolefins, copolymers of ethylene and vinyl acetate, copolymers of ethylene and butyl acrylate, copolymers of ethylene and acrylic acid, copolymers of ethylene and methacrylic acid, ethylene acrylic acid copolymer and/or copolymers of ethylene and methyl acrylate in each case with sodium and/or with potassium ionomers, whereby the proportion of ionomers is preferably 30 % by weight to 95 % by weight, in particular 50 % by weight to 80 % by weight.

9. Use of impregnated materials and layer materials as claimed in Claim 1 for coating or supporting insulation material walls.

**Revendications**

1. Utilisation d'ionomères en tant que matériau pare-vapeur efficace dans des barrières pare-vapeur pour les bâtiments, ayant une résistance à la diffusion de vapeur d'eau qui dépend de l'humidité relative de l'air, pour l'étanchéification de matériaux isolants, l'ionomère étant formé de 50 à 99 %-mol. d'éthylène et de 1 à 50 %-mol. d'acide méthacrylique, et les groupements acides de ces copolymérisats étant neutralisés à 0,5 à 100 % avec de cations lithium, sodium, magnésium, potassium et/ou zinc ou avec le cation du métal alcalinoterreux calcium, et

   a) le matériau étant sous forme de feuille d'ionomères ou
   b) la barrière pare-vapeur étant sous forme de matériau d'imprégnation en nappe réalisé à partir d'un non-tissé ou d'un tissu en tant que matière structurelle et d'un ionomère en tant que résine d'imprégnation ou
   c) la barrière pare-vapeur étant formée d'une matière en couches autoporteuse dans laquelle une des couches est une feuille d'ionomères d'une épaisseur entre 5 et 100 $\mu$m.

2. Utilisation selon la couche 1, l'ionomère en forme de couches présentant les résistances à la diffusion de la vapeur d'eau (valeur $S_d$) suivantes définies selon DIN 52615 :

   - pour 25 % d'humidité relative de l'air,
   une valeur sd de 1 à 20 m ou
   de 4 à 20 m ou de 1 à 4 m et
   - pour 72,5 % d'humidité relative de l'air,
   une valeur sd de 0,02 à 4 m,

   les deux valeurs sd pour 25 % d'humidité relative de l'air et 72,5 % d'humidité relative de l'air se différenciant selon un facteur f supérieur à 2, en particulier supérieur à 5.

3. Utilisation d'ionomères selon une des revendications précédentes pour des matières en couches dans lesquelles la couche médiane se compose de l'ionomère, une des couches extérieures a une fonction porteuse et l'autre une fonction de protection de la couche médiane ou également une fonction porteuse.

4. Utilisation selon la revendication 3 pour une matière en couches dans laquelle les deux couches extérieures se composent de papier, de spunbond en polyéthylène, de spunbond en polypropylène, de spunbond en polyester ou de non-tissé en viscose.

**5.** Utilisation selon la revendication 3 ou 4 avec une matière en couches ayant une couche médiane supplémentaire réalisée à partir d'un non-tissé, d'un tissu ou d'un canevas en polyester, en fibres de verre, en polyéthylène ou en polypropylène.

**6.** Utilisation des ionomères selon les revendications 1 à 5 sous forme de matériau d'imprégnation à partir d'une matière structurelle et de l'ionomère, la matière structurelle étant un non-tissé ou un tissu à partir de fibres discontinues de polyéthylène, de fibres discontinues de polypropylène, de fibres discontinues de polyester, de fibres de cellulose, de polyamide ou de papier.

**7.** Utilisation des ionomères pour un matériau d'imprégnation en nappe selon la revendication 1, dans lesquels la quantité des ionomères est de 2 à 100 g/m$^2$.

**8.** Utilisation des ionomères selon la revendication 1, **caractérisée en ce qu'**ils sont formés en tant que mélanges avec des polyamides, des polyesters, des polyuréthannes, des polyoléfines, des copolymères d'éthylène et d'acétate de vinyle, des copolymères d'éthylène et d'acrylate de butyle, des copolymères d'éthylène et d'acide acrylique, des copolymères d'éthylène et d'acide méthacrylique, un copolymère éthylène- acide acrylique et/ou des copolymères d'éthylène et d'acrylate de méthyle respectivement avec des ionomères sodium et/ou avec des ionomères potassium, la proportion des ionomères étant de préférence de 30 %-poids à 95 %-poids, en particulier de 50 %-poids à 80 %-poids.

**9.** Utilisation de matériaux d'imprégnation et de matières en couches selon la revendication 1 pour encoller ou soustendre des parois de matériau isolant.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19514420 A
- DE 19902102 A
- US 3264272 A
- US 3651183 A
- US 4645710 A

**In der Beschreibung aufgeführte Nicht-Patentliteratur**

- Römpps Chemielexikon. Georg Thieme Verlag, 1990